(19) Europäisches Patentamt / European Patent Office / Office européen des brevets

(11) **EP 2 778 308 B1**

(12) **EUROPEAN PATENT SPECIFICATION**

(45) Date of publication and mention
of the grant of the patent:
**14.09.2016 Bulletin 2016/37**

(51) Int Cl.:
**E04B 1/76** *(2006.01)*　　**E04B 1/80** *(2006.01)*
**F24F 5/00** *(2006.01)*　　**E04B 1/74** *(2006.01)*

(21) Application number: **14275066.0**

(22) Date of filing: **14.03.2014**

(54) **Insulating panels for buildings**

Dämmplatten für Gebäude

Panneaux isolants pour bâtiments

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2013 GB 201304580**

(43) Date of publication of application:
**17.09.2014 Bulletin 2014/38**

(73) Proprietor: **Jablite Limited
Belvedere, Kent DA17 6BG (GB)**

(72) Inventor: **Atkin, Howard
Harrogate, Yorkshire HG2 8JU (GB)**

(74) Representative: **Burt, Matthew Thomas et al
Abel & Imray
20 Red Lion Street
London WC1R 4PQ (GB)**

(56) References cited:
**BE-A- 462 354　　　DE-A1- 2 632 486
DE-A1- 3 530 884　　DE-A1- 3 530 973
FR-A1- 2 522 121　　US-A- 3 929 186
US-A1- 2013 008 109**

## Description

Field of the Invention

The present invention concerns insulating panels for mounting on the surface of a structural element of a building, such as the exterior of an external wall or roof. More particularly, the invention concerns the use of such insulating panels to provide dynamic insulation systems. The invention also concerns buildings comprising such insulating panels, and methods of reducing or increasing the heat lost from the interior of a building comprising such insulating panels.

Background of the Invention

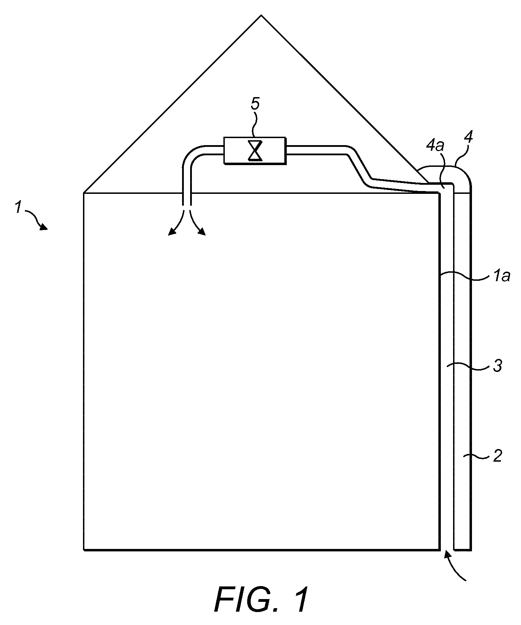

Dynamic insulation systems for buildings are well known. An exemplary system is shown in Figure 1. A building 1 has mounted on the exterior surface 1a of a wall of the building 1 a layer of insulation 2. The layer of insulation 2 is such that there is an air gap 3 between the wall surface 1a and insulation 2 through which air can pass. (For clarity the insulation 2 and air gap 3 are not shown to scale, and in practice the air gap 3 would be much thinner, for example.) The lower edge of the air gap 3, at the base of the wall surface 1a, is open to the exterior of the building. The upper edge of the air gap 3, where the wall surface 1a meets the roof of the building, has a closure 4 to create a plenum 4a in which air from the air gap 3 can collect. The plenum 4a is connected to a suction fan 5.

In use, the fan 5 draws air from the plenum 4a into the interior of the building 1. The drawing of air from the plenum 4a causes air to be drawn from the exterior of the building at the lower edge of the air gap 3, through the air gap 3, and into the plenum 4a to replace the air removed by the fan 5. As the air is drawn through the air gap 3, some heat will be transferred to it from the interior of the building via the wall surface 1a. Heat will also be transmitted from the air back to the wall surface 1a, while in contrast the insulating layer 1 will minimise heat being lost from the air in the air gap 3 to the exterior air. The air in the air gap 3 will in due course be collected into the plenum 4a and into the interior of the building 1. In this way, heat transmitted through the wall surface 1a that would otherwise be lost through the insulating layer 1 is instead collected and returned to the interior of the building.

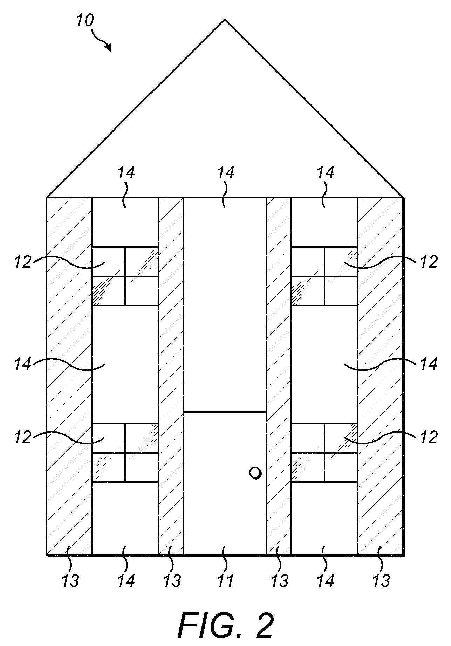

A known dynamic insulation system of this type is shown in WO2006/111621 A1 (Palay) published 26 October 2006. The system comprising insulating panels which provide vertical "flutes" through which air can pass. It is a disadvantage of this system that it only allows one-dimensional flow of air through the insulating panels, i.e. air can move in a vertical direction only. As a building wall will usually comprise several features over which the panels cannot be mounted, such as doors and windows, this means that the area of the wall over which air can flow can in practice be very small. An example of this is shown in Figure 2, in which a building 10 has a door 11 and windows 12. In this case, the areas 13, being the areas where there are no features disposed between the top and bottom of the wall, are the only areas over which air can pass from the bottom to the top of the wall. No air can be passed over the areas 14, and therefore no heat can be collected from these areas, despite it desirable to do so and despite it being possible to mount panels over those areas.

It is therefore desirable to have a system in which air can move both vertically and horizontally through the air gap, so that heat can be collected from areas such as the areas 14 in Figure 2. Such systems are also well known, and some examples are as follows.

US 5561958 A (Clement) published 8 October 1996 discloses such a system. In this system the air gap is provided by means of pegs that spacing apart the layers of the insulation to create the air gap, allowing two-dimensional flow of air around the pegs in the air gap. However, it is a disadvantage of this system that it has too large an air gap, and insufficient insulation for a given thickness of panel to be fully effective. The construction of the system is also complicated.

FR 2597903 A1 (La Rhenane SA) published 30 October 1987 discloses a system with vertical flutes, but with lateral gaps to allow air to pass between the flutes. It is a disadvantage of this system that air is only able to flow horizontally through the gaps and not in other areas, and also during construction the system will require careful alignment to ensure that the lateral grooves meet to allow air to flow between them.

CA 2777166 A1 (Powerhouse Building Solutions) published 12 November 2012 discloses a system in which a single layer of insulation has multiple channels through which air can flow. However, in this system heat will be able to "short circuit" the system, in other words due to its construction heat will be able to escape via the insulating panel to the exterior of the building, rather than being collected by air passing through the air gap and returned to the interior of the building. Thus, in practice the system performs more like a conventional solid insulation panel rather than a dynamic insulation panel.

The document DE 2632486 A1 discloses an insulating panel for mounting on a surface of a structural element of a building with the features of the preamble of claim 1.

The present invention seeks to solve or mitigate the above-mentioned problems. Alternatively and/or additionally, the present invention seeks to provide an improved insulating panel for a dynamic insulation system, an improved dynamic insulation system, and improved methods of reducing and increasing the heat lost from the interior of a building.

Summary of the Invention

In accordance with a first aspect of the invention there is provided an insulating panel for mounting on a surface of a structural element of a building, the panel comprising:

an inner layer of insulating material for mounting on the surface of the structural element;

surface of a structural element of a building, the panel comprising:

an inner layer of insulating material for mounting on the surface of the structural element;
an outer layer of insulating material, the inner layer and outer layer being respectively arranged such that an air gap is formed within the panel between an inside surface of the inner layer and an inside surface of the outer layer, and such that air can pass between the air gap and the exterior of the panel via a peripheral edge of the panel;
wherein the surface heat transfer coefficient of the inner layer is greater than the surface heat transfer coefficient of the outer layer;
characterised in that the air gap is formed by a plurality of grooves on the inside surface of the inner layer and a further plurality of grooves on the inside surface of the outer layer, the surfaces of the respective grooves forming the respective inner surfaces of the inner and outer layers; and in that the surface of the grooves of the inner layer has a rougher texture than the surface of the grooves of the outer layer.

The surface heat transfer coefficient of a material is a well-known measure of the rate at which heat is transferred from air passing across the material to the material via its surface. A higher surface heat transfer coefficient means more heat will be transferred. Typically the coefficient h, measured in watts per squared-metre-kelvin (i.e. $W/(m^2K)$), will calculated as follows:

$$h = \frac{Q}{A \cdot \Delta T}$$

where $Q$ is heat flow in joules per second (i.e. watts), A is the heat transfer surface area in squared metres, and $\Delta T$ is the difference in temperature between the material's surface and the surrounding air.
By having the surface heat transfer coefficient of the inner layer greater than the surface heat transfer coefficient of the outer layer, this encourages heat to be transferred between the inner layer and the air in the air gap, while discouraging heat being transferred between the outer layer and the air in the air gap. When the panel is in use in a dynamic insulation system, this increases the effectiveness of the insulating panel when being used to reduce heat being lost from a building, as heat from the interior of the building transmitted to the air in the air gap via the inner layer is more likely to be transmitted back to the inner layer or collected in the air returned to the interior of the building, and less likely to be transmitted through the outer layer and lost to the exterior air. Further, it also increases the effectiveness of the insulating panel when being used to increase heat being lost from a building, as in this case heat is more likely to be transmitted from the interior of the building to the air in the air gap and then expelled to the exterior of the building, and heat from the exterior of the building is less likely to be transmitted through the outer layer to the air in the air gap where it could be transmitted via the inner layer to the interior of the building.

Preferably, air can pass between the air gap and the exterior of the panel via all peripheral edges of the panel. This improves the flow of air between air gaps of adjacent panels when used in a dynamic insulation system. Preferably, the panel is arranged so that air can pass between the air gap of the panel and the air gap of an adjacent panel via the contacting peripheral edges of the panel and further panel.

Advantageously, a peripheral edge of the panel is shaped to interlock with the peripheral edge of an adjacent panel. This makes the panels easier to align and install, and more secure once installed. Advantageously, the interlocking peripheral edge of the panel comprises a perforated edging.

By having the inside surface of the inner layer have a rough texture, this increases the surface area of the inside surface of the inner layer over which air can travel, increasing the transmittal of heat between the air and the inner layer. Advantageously, the inside surface of the inner layer has a higher emissivity than the inside surface of the outer layer. (The emissivity of the surface of material is the relative ability of the surface to emit energy by radiation. The higher the emissivity, the more able the surface is to emit radiation. Thus in general, more reflective materials have lower emissivity, and duller, blacker materials have higher emissivity.) The inside surface of the inner layer may, for example, be black in colour. The inside surface of the inner layer may comprise a high emissivity layer. The high emissivity layer may comprise high emissivity paint.

By having the inside surface of the outer layer smooth, this minimises the surface area of the inside surface of the outer layer over which air can travel, decreasing the transmission of heat between the air and the outer layer. Advantageously, the inside surface of the outer layer comprises a heat reflecting layer. The heat reflecting layer may comprise silvered foil, metallic film such as aluminium or chrome film, paint containing titanium dioxide pigments or mica flakes, or a combination of reflective films and heat reflective bonding agents such as mylar file bonded using an adhesive containing titanium dioxide pigment, for example.

By having the air gap formed by a plurality of grooves on the inside surface of the inner layer and a further plurality of grooves on the inside surface of the outer layer. This causes the air in the air gap to move between (i.e. it is directed towards and away from) the inner layer and the outer layer as it travels through the air gap. Preferably, the grooves are triangular in cross section. Preferably, the grooves are straight. Preferably, the inner layer and outer layer have identical grooves. Alternatively, the grooves of the inner layer and outer layer have different cross sections and/or different shapes.

Preferably, the plurality of grooves on the inside surface of the inner layer are arranged so that they cross over the further plurality of grooves on the inside surface of the outer layer.

Advantageously, the inside surface of the inner panel and the inside surface of the outer layer are in contact only at the areas at which the peaks of the plurality of grooves of the inner layer cross the peaks of the plurality of grooves of the outer layer.

This minimises the occurrence of obstructions within the air gap, so allowing the air to move freely through the air gap. Advantageously, the inner layer and outer layer are in contact at points only. Alternatively, the inner layer and outer layer may be in contact at isolated areas.

Advantageously, the inside surface of the inner layer is shaped such that it has a higher surface area than the inside surface of the outer layer.

Advantageously, the peripheral edge of the panel comprises a layer of a reinforcing material through which air can pass. This increases the strength, for example the shear strength, of the panel, while still allowing air to pass through the peripheral edge of the panel into and out of the air gap. The reinforcing material may have holes, or may be permeable to air. Preferably, the reinforcing material is reticulated. The reinforcing material may be scrim. The scrim may be glass fibre scrim. Alternatively, the scrim may be carbon fibre scrim. Alternatively, the reinforcing material may be a plastic layer. The plastic layer may be perforated with holes.

In accordance with a second aspect of the invention there is provided a building comprising:

    a structural element;
    a plurality of panels as described above mounted on a surface of the structural element;
    wherein the plurality of panels are positioned so as to form a connected insulating surface, such that the insulated surface has at least a first peripheral edge and a second peripheral edge through which air can pass from the exterior of the insulating panel to the air gaps of the plurality of panels.

Thus, the panels can be used in a dynamic insulation system for a building. The structural element may be a wall, roof, ceiling of any other structural surface.

Preferably, the plurality panels are arranged so that air can pass between the air gaps of any panels mounted on the surface. In other words, the insulating surface provided by the panels has a single connected air gap.

Preferably, the surface of the insulating surface opposite to the surface mounted on the structural element is covered in a reinforcing material. This improves the strength and durability of the insulating surface. Advantageously, the reinforcing material is glass scrim.

Preferably, the building further comprises a fan system arranged to draw air through the air gaps of the panels via the first peripheral edge of the insulating surface. Preferably, the first peripheral edge is at the upper edge of the structural element. Preferably, the fan system is arranged to draw air from the first peripheral edge via a plenum. The drawn air may be expelled into an uninhabited area in the interior of the building. This allows heat collected by the dynamic insulation system to be returned to the interior of the building without disturbing occupants of the building, for example by creating a draught or noise.

The fan system may be further arranged to blow air through the air gaps of the panels via the first peripheral edge of the insulating surface. Alternatively, a separate fan system may be arranged to blow air through the air gaps of the panels via the first peripheral edge of the insulating surface. Preferably, the fan system or separate fan system draws air for blowing from exterior of the building.

Preferably, the air gaps of the panels are in communication with the exterior of the building via the second peripheral edge of the insulating surface. Preferably, the second peripheral edge is at the lower edge of the structural element.

In accordance with a third aspect of the invention there is provided a method of reducing the heat lost from the interior of a building as described above, comprising the step of causing air to pass into the second peripheral edge of the insulating surface, through the air gap of the insulating surface, and out of first peripheral edge of the insulating surface. In this way, the insulating surface acts as a dynamic insulation system to reduce the heat lost from the interior of the building. The air moved by means of the fan system described above.

Preferably, the air that passes into the second peripheral edge of the insulating surface is drawn from the exterior of the building. Preferably, the air that passed out of the first peripheral edge of the insulating surface is passed to the interior of the building.

In accordance with a fourth aspect of the invention there is provided a method of increasing the heat lost from the interior of a building as described above, comprising the step of causing air to pass into the first peripheral edge of the insulating surface, through the air gap of the insulating surface, and out of second peripheral edge of the insulating surface. In this way, the insulating surface acts as a dynamic insulation system to increase the heat lost from the interior of the building. The air moved by means of the fan systems described above.

Preferably, the air that passes into the first peripheral edge of the insulating surface is drawn from the exterior of the building. Preferably, the air that passes out of the second peripheral edge of the insulating surface is passed to the exterior of the building.

It will of course be appreciated that features described in relation to one aspect of the present invention may be incorporated into other aspects of the present invention.

Description of the Drawings

Embodiments of the present invention will now be described by way of example only with reference to the accompanying schematic drawings of which:

Figure 1    shows a known dynamic insulation system;
Figure 2    shows another known dynamic insulation system;
Figure 3    shows an insulating panel in accordance with a first embodiment of the invention;
Figure 4    shows a portion of a peripheral edge of the panel of Figure 3;
Figure 5a    shows the inner layer of the panel;
Figure 5b    shows a side view of the inner layer;
Figure 6    shows a side view of the outer layer of the panel of Figure 3;
Figure 7    shows an illustration of the overlapping grooves of the inner and outer layer;
Figure 8    shows a cross-section of a portion of a dynamic insulation system in accordance with an embodiment of the invention;
Figure 9    shows the dynamic insulation system of Figure 8.

Detailed Description

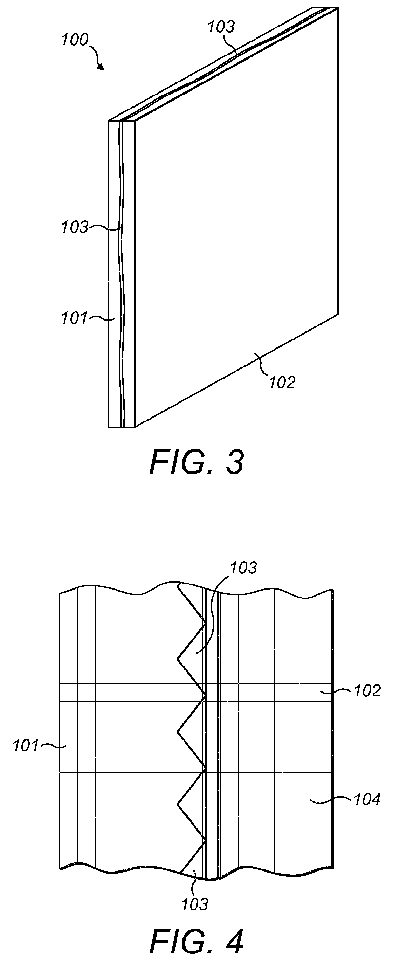

Figure 3 shows an insulating panel in accordance with an embodiment of the invention. For clarity the insulating panel 100 is not shown to scale, but as an example the flat face of the panel 100 could have a height of 1200mm and width of 750mm, with the peripheral edge of the panel 100 having a thickness of 100mm.

The panel 100 comprises an inner layer 101 and an outer layer 102. The inner layer 101 and outer layer 102 are made of moulded expanded polystyrene. Between the inner layer 101 and outer layer 102 is an air gap 103, the edges of which can be seen on the peripheral edge of the panel 100. The peripheral edge of the panel 100 is covered in a glass scrim 104, i.e. a scrim made of glass fibre (not shown in Figure 3). ("Scrim" is a heavy, coarse woven material used in building construction.)

A portion of a peripheral edge of the panel 100 is shown in Figure 4. As can be seen, and as described in more detail below, the inside edge of the inner layer 101 touching the corresponding inside edge of the outer layer 102 is saw-tooth shaped, i.e. a series of triangles, with the voids between the triangles providing the edge of the air gap 103. The peripheral edge is covered by the glass scrim 104. As the glass scrim is reticulated (i.e. net-like), air can pass through the glass scrim between the air gap 104 and the exterior of the panel 100. In alternative embodiments, the peripheral edge of the panel may be covered with reinforcing layers other than glass scrim. In this case, the layer will nevertheless be such that air can pass between the air gap and the exterior of the panel through the reinforcing layer. For example, in an alternative embodiment the peripheral edge of the panel is covered by a plastic layer with a row of perforated holes in the area where the layer covers the air gap.

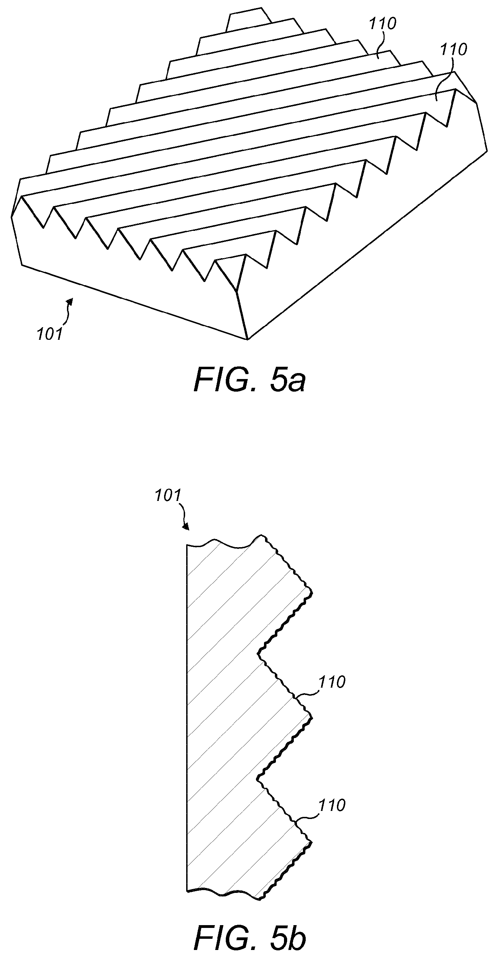

The inner layer 101 is shown in isolation in Figure 5a. As can be seen, the inside surface of the inner layer 101 comprises a series of triangular grooves 110. The grooves could have, as an example, a pitch (i.e. distance between peaks) and depth of 5 to 15mm.

A cross-section of a portion of the inner layer 101 is shown in Figure 5b. The inside surface of the inner layer 101 has a high emissivity. This is due to the properties of the expanded polystyrene from which the inner layer is formed, which amongst other things is black in colour. In alternative embodiments the inner layer may be black throughout, or only at the inside surface. The inside surface of the inner layer 101, i.e. the surface of the grooves 110, has a rough texture. The rough texture may be provided by the mould in which the inner layer 101 is formed having a roughened surface, for example provided by dot-like protrusions on the surface, or alternatively the inside surface of the inner layer 101 could be roughened, for example by being scratched, after it has been moulded.

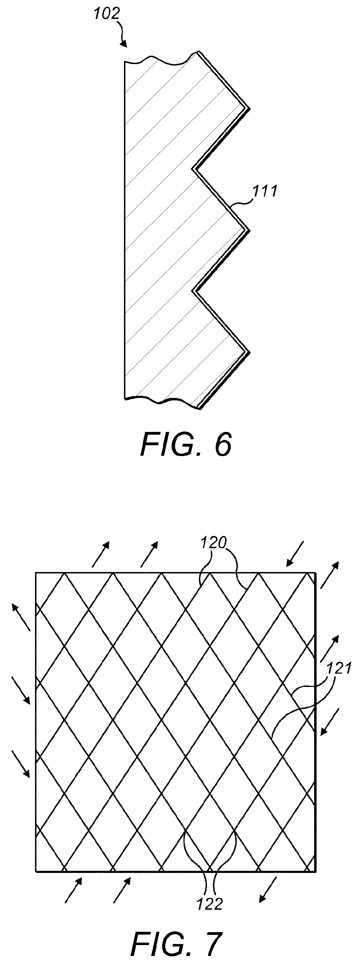

Similarly to the inner layer 101, the inside surface of the outer layer 102 comprises a series of triangular grooves. However, as explained in more detail below the grooves of the outer layer 102 run in the opposite direction to the grooves 110 of the inner layer 101. A cross-section of a portion of the outer layer 102 is shown in Figure 6. The inside surface of the outer layer 102 is covered with a layer of silvered foil 111. In this case, the surface of the silver foil layer 111 providing the inside surface of the outer layer 102 is smooth. This is the case even though the surface of the block of insulation which it covers has a rough texture, and in fact that rough texture aids the adhesion of the silver foil layer 111 to the block of insulation.

Figure 7 is an illustration of the panel 100 to show in particular the grooves 120 of the inner layer 101 and the grooves 121 of the outer layer 102. As can be seen, the grooves are oriented in opposing directions, so that the inner layer 101 and outer layer 102 will meet only at the points 122 where the peaks of the grooves cross. It will therefore be appreciated that this allows two-dimensional flow of air within the air gap 103 between the inner layer 101 and outer layer 102.

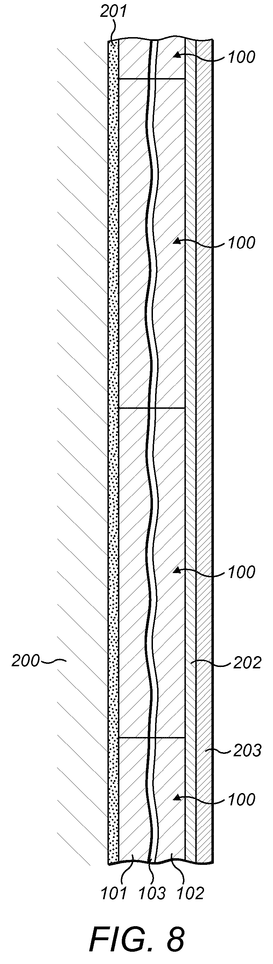

Figure 8 shows a cross-section of a portion of a dynamic insulation system in accordance with an embodiment of the invention. The system incorporates the panels 100 described above on a building such as a domestic house. The exterior surface of a wall 200 of the building is covered with an insulating layer, formed of panels 100, the inner layers 101 of which are fixed to the wall 200 by a layer of adhesive 201. In alternative embodiments, the panels comprise fastening holes through which they are fixed to the wall by mechanical fasteners. The peripheral edges of the panels 100 are in contact with adjacent panels, so that the edges of the air gaps 103 of each panel 100 are aligned. Thus, air is able to pass freely between the air gaps 103 of adjacent panels. The exterior surface of the insulating layer, in other words the outside surface of the outer layers 102 of the panels 100, is covered with a layer 202 of glass scrim. Finally, the layer 202 of glass scrim is covered by a layer 203 of cement render.

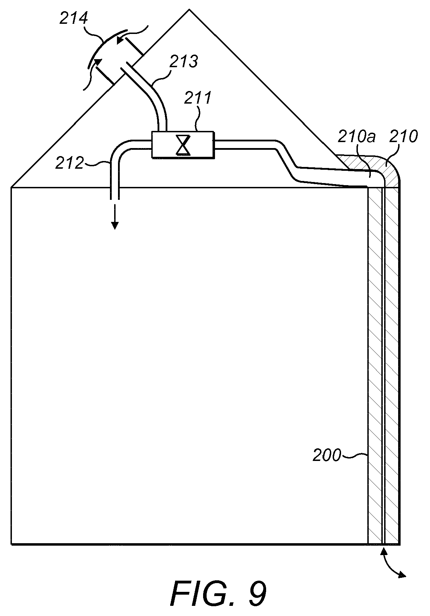

The building with the system is shown in Figure 9. Similarly to the well-known system shown in Figure 1, in a fan 211 is in communication with a plenum 210 at the upper edge of the wall 200, and the lower edge of the air gap of the insulating layer is open to the exterior of the building. The fan 211 can draw air into the building, with drawn air being vented via a pipe 212 into an uninhabited area of the building, for example an airing cupboard.

In addition, the fan 211 can draw air from the exterior of the building via a pipe 213 connected to an inlet 214 on the roof, so as to blow the air into the plenum 210a.

When used to reduce heat lost from the building, as in known systems the fan 211 draws air from the exterior of the building into the lower edge of the air gap of the insulating layer, through the air gap to the plenum 210a, by drawing air from the plenum 210a into the interior of the building. Again as with known systems, as the air passes through the air gap it collects heat from the exterior of the wall 200 and returns it to the interior of the building.

However, the system of the present invention is more effective at scavenging heat in several ways.

First, as the inner 101 and outer 102 layers of the panels 100 meet at points 122 only, the air passing through the air gaps 103 of the panels 100 is particularly free to flow horizontally across the face of the wall 200, increasing amount of heat successfully collected due to the increased area of wall over which air can move freely.

Second, as the air is forced to move over the peaks between the grooves in the inside surfaces of the inner 101 and outer 102 layers, it in facts flows in three dimensions, in other words towards and away from the wall 200 as well as vertically and horizontally across it. This extra movement of the air again increases the amount of heat successfully collected, due to the increased contact of air with the inner layer 101.

Third, as the inside surface of the inner layer 101 has a rough texture, this increases the surface area of the inside surface of the inner layer 101 over which the air in the air gap 103 can travel, increasing the amount of heat transferred from the inner layer 101 to the air. In addition, the high emissivity of the surface increases the amount of heat transferred to the air, and also from the air back to the inner layer 101. Conversely, the smoothness of the inside surface of the outer layer 102, plus the reflective layer 111 with which it is covered, reduces the amount of heat in the air in the air gap 103 that is transmitted to the outer layer 102 and so to the exterior of the building. Together, this lack of symmetry in the insulating properties of the inner 101 and outer 102 layers, namely that the surface heat transfer coefficient of the inner layer 101 is greater than the surface heat transfer coefficient of the outer layer 102, again increases the amount of heat that is successfully collected and returned to interior of the building.

Additionally, the system can be used to increase the heat lost from the building, for example to cool the building during hot weather. In this case, the fan 211 draws air from the exterior of the building via the air inlet 214, and blows it into the plenum 210a. This causes air to flow through the air gap of the insulating layer to its lower edge, where it is expelled into the exterior air.

When used in this way, the properties of the insulating panels 100 again increase the scavenging by the air flowing through the air gap of heat escaping from the interior of the building through the inner layer 101. However, in this case the properties of the outer layer 102 also reduce the amount of heat transmitted through the outer layer 102 from the exterior air to the air flowing through the air gap 103, so reducing the heat in the air which could be transmitted through the inner layer 101 into the interior of the building. As the air flowing through the air gap is expelled into the exterior air, any collected heat is not reintroduced into the interior of the building. This operation of the system thus acts to increase the heat lost from the building.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

While in the above embodiments the grooves in the inside surfaces of the inner layer and outer layer are triangular in cross section, it will be appreciated that grooves with other cross sections could be used, for example grooves with cross sections that are sine waves, truncated triangles or the like. While the grooves are straight, they could be curved or other shapes. Further, while in the above embodiments the inner layer and outer layer have identical grooves, they could have different cross sections and/or different shapes.

It will be appreciated that while it has been described that the inside surface of the inner layer has a high emissivity due to its colour, materials that encourage the transmission of heat through inside surface of the inner layer could be used. For example, the inside surface of the inner layer could be coated with a high emissivity paint. In this case, ideally a thin enough layer would be used that the roughness of the inside surface of the inner layer was not affected.

It will similarly be appreciated that while silvered foil has been described for use on the inside surface of the outer layer, other materials that discourage the transmission of heat through inside surface of the outer layer could be used, for example metallic films such as aluminium or chrome film, paints containing titanium dioxide pigments or mica flakes, combinations of reflective films and heat reflective bonding agents such as mylar file bonded using an adhesive containing titanium dioxide pigment, or other heat reflective coatings.

## Claims

1. An insulating panel (100) for mounting on a surface of a structural element of a building, the panel (100) comprising:

    an inner layer (101) of insulating material for mounting on the surface of the structural element;
    an outer layer (102) of insulating material, the inner layer (101) and outer layer (102) being respectively arranged such that an air gap (103) is formed within the panel (100) between an inside surface of the inner layer (101) and an inside surface of the outer layer (102), and such that air can pass between the air gap (103) and the exterior of the panel (100) via a peripheral edge of the panel (100);

    wherein the surface heat transfer coefficient of the inner layer (101) is greater than the surface heat transfer coefficient of the outer layer (102); **characterised in that** the air gap (103) is formed by a plurality of grooves (110) on the inside surface of the inner layer (101) and a further plurality of grooves on the inside surface of the outer layer (102), the surfaces of the respective grooves forming the respective inner surfaces of the inner and outer layers; and **in that** the surface of the grooves (110) of the inner layer (101) has a rougher texture than the surface of the grooves of the outer layer (102).

2. An insulating panel (100) as claimed in claim 1, wherein the inside surface of the inner layer (101) has a higher emissivity than the inside surface of the outer layer (102).

3. An insulating panel (100) as claimed in any preceding claim, wherein the inside surface of the outer layer (102) comprises a heat reflecting layer (111).

4. An insulating panel (100) as claimed in any preceding claim, wherein the peripheral edge of the panel (100) comprises a layer of a reinforcing material (104) through which air can pass.

5. A building comprising:

    a structural element;
    a plurality of panels (100) as claimed in any of claims 1 to 4 mounted on a surface of the structural element; wherein the plurality of panels (100) are positioned so as to form a connected insulating surface, such that the insulated surface has at least a first peripheral edge and a second peripheral edge through which air can pass from the exterior of the insulating panel (100) to the air gaps (103) of the plurality of panels (100).

6. A building as claimed in claim 5, wherein the surface of the insulating surface opposite to the surface mounted on the structural element is covered in a reinforcing material (202).

7. A building as claimed in claim 5 or 6, further comprising a fan system arranged to draw air through the air gaps (103) of the panels (100) via the first peripheral edge of the insulating surface.

8. A building as claimed in claim 7, wherein the fan system is further arranged to blow air through the air gaps (103) of the panels (100) via the first peripheral edge of the insulating surface.

9. A building as claimed in any of claims 5 to 8, wherein the air gaps (103) of the panels (100) are in communication with the exterior of the building via the second peripheral edge of the insulating surface.

10. A method of reducing the heat lost from the interior of a building as claimed in any of claims 5 to 8, comprising the step of causing air to pass into the second peripheral edge of the insulating surface, through the air gap (103) of the insulating surface, and out of first peripheral edge of the insulating surface.

11. A method as claimed in claim 10, wherein the air that passed out of the first peripheral edge of the insulating surface is passed to the interior of the building.

12. A method of increasing the heat lost from the interior of a building as claimed in any of claims 5 to 11, comprising the step of causing air to pass into the first peripheral edge of the insulating surface, through the air gap (103) of the insulating surface, and out of second peripheral edge of the insulating surface.

## Patentansprüche

1. Dämmplatte (100) zur Anbringung an einer Fläche eines Strukturelements eines Gebäudes, wobei die Dämmplatte (100) aufweist:

    eine Innenschicht (101) aus Dämmmaterial zur Anbringung an der Fläche des Strukturelements;
    eine Außenschicht (102) aus Dämmmaterial, wobei die Innenschicht (101) und die Außenschicht (102) zueinander so angeordnet sind, dass ein Luftspalt (103) in der Platte (100) zwischen einer innenseitigen Fläche der Innenschicht (102) und einer innenseitigen Fläche der Außenschicht (102) gebildet ist, und so, dass Luft zwischen dem Luftspalt (103) und dem Äußeren der Platte (100) über einen Umfangsrand der Platte (100) hindurchtreten kann;

    wobei der Flächen-Wärmeübertragungskoeffizient der Innenschicht (101) größer ist als der Flächen-Wärmeübertragungskoeffizient der Außenschicht (102);
    dadurch gekennzeichnet, dass der Luftspalt (103) durch mehrere Rillen (110) an der innenseitigen Fläche der Innenschicht (101) und weitere mehrere Rillen an der innenseitigen Fläche der Außenschicht (102) gebildet ist, wobei die Flächen der jeweiligen Rillen die jeweiligen Innenflächen der Innen- und Außenschicht bilden, und dass die Fläche der Rillen (110) der Innenschicht (10) eine rauere Textur hat als die Fläche der Rillen der Außenschicht (102).

2. Dämmplatte (100) nach Anspruch 1, wobei die innenseitige Fläche der Innenschicht (101) einen höheren Emissionsgrad hat als die innenseitige Fläche der Außenschicht (102).

3. Dämmplatte (100) nach einem der vorhergehenden Ansprüche, wobei die innenseitige Fläche der Außenschicht (102) eine wärmereflektierende Schicht (111) aufweist.

4. Dämmplatte (100) nach einem der vorhergehenden Ansprüche, wobei der Umfangsrand der Platte (100) eine Schicht aus verstärkendem Material (104) aufweist, durch die Luft hindurchtreten kann.

5. Gebäude, Folgendes aufweisend:

    ein Strukturelement;
    mehrere Platten (100) nach einem der Ansprüche 1 bis 4, die an einer Fläche des Strukturelements angebracht sind;

    wobei die mehreren Platten (100) eine verbundene Dämmfläche bildend so positioniert sind, dass die gedämmte Fläche zumindest einen ersten Umfangsrand und einen zweiten Umfangsrand hat, durch die Luft vom Äußerem der Dämmplatte (100) her zu den Luftspalten (103) der mehreren Platten (100) hindurchtreten kann.

6. Gebäude nach Anspruch 5, wobei die Fläche der Dämmfläche, die der am Strukturelement angebrachten Fläche entgegengesetzt ist, mit einem Verstärkungsmaterial (202) bedeckt ist.

7. Gebäude nach Anspruch 5 oder 6, darüber hinaus ein Lüftersystem aufweisend, das dazu eingerichtet ist, über den ersten Umfangsrand der Dämmfläche Luft durch die Luftspalte (103) der Platten (100) anzuziehen.

8. Gebäude nach Anspruch 7, wobei das Lüftersystem darüber hinaus dazu eingerichtet ist, über den ersten Umfangsrand der Dämmfläche Luft durch die Luftspalte (103) der Platten (100) auszublasen.

9. Gebäude nach einem der Ansprüche 5 bis 8, wobei die Luftspalte (103) der Platten (100) über den zweiten Umfangsrand der Dämmfläche mit dem Äußeren des Gebäudes in Verbindung stehen.

10. Verfahren zu Reduzieren des Wärmeverlusts aus dem Inneren eines Gebäudes nach einem der Ansprüche 5 bis 8, den Schritt umfassend, zu bewirken, dass Luft in den zweiten Umfangsrand der Dämmfläche eintritt, durch den Luftspalt (103) der Dämmfläche hindurchtritt und aus dem ersten Umfangsrand der Dämmfläche austritt.

11. Verfahren nach Anspruch 10, wobei die Luft, die aus dem ersten Umfangsrand der Dämmfläche austrat, zum Inneren des Gebäudes geleitet wird.

12. Verfahren zum Erhöhen des Wärmeverlusts aus dem Inneren eines Gebäudes nach einem der Ansprüche 5 bis 11, den Schritt umfassend, zu bewirken, dass Luft in den ersten Umfangsrand der Dämmfläche eintritt, durch den Luftspalt (103) der Dämmfläche hindurchtritt und aus dem zweiten Umfangsrand der Dämmfläche austritt.

## Revendications

1. Panneau isolant (100) destiné à être monté sur une surface d'un élément structurel d'un bâtiment, le panneau (100) comprenant :

    une couche interne (101) de matériau isolant destiné à être monté sur la surface de l'élément structurel ;
    une couche externe (102) de matériau isolant, la couche interne (101) et la couche externe (102) étant respectivement agencées de sorte qu'un espace d'air (103) est formé à l'intérieur du panneau (100) entre une surface intérieure de la couche interne (101) et une surface intérieure de la couche externe (102), et de sorte que l'air peut passer entre l'espace d'air (103) et l'extérieur du panneau (100) via un bord périphérique du panneau (100) ;

dans lequel le coefficient de transfert de chaleur de surface de la couche interne (100) est supérieur au coefficient de transfert de chaleur de surface de la couche externe (102) ;

**caractérisé en ce que** l'espace d'air (103) est formé par une pluralité de rainures (110) sur la surface intérieure de la couche interne (101) et une autre pluralité de rainures sur la surface intérieure de la couche externe (102), les surfaces des rainures respectives formant les surfaces internes respectives des couches interne et externe ;

et **en ce que** la surface des rainures (110) de la couche interne (101) a une texture plus rugueuse que la surface des rainures de la couche externe (102).

2. Panneau isolant (100) selon la revendication 1, dans lequel la surface intérieure de la couche interne (101) a une émissivité plus importante que la surface intérieure de la couche externe (102).

3. Panneau isolant (100) selon l'une quelconque des revendications précédentes, dans lequel la surface intérieure de la couche externe (102) comprend une couche de réflexion de chaleur (111).

4. Panneau isolant (100) selon l'une quelconque des revendications précédentes, dans lequel le bord périphérique du panneau (100) comprend une couche d'un matériau de renforcement (104) à travers lequel l'air peut passer.

5. Bâtiment comprenant :

un élément structurel ;
une pluralité de panneaux (100) selon l'une quelconque des revendications 1 à 4, montés sur une surface de l'élément structurel ;
dans lequel la pluralité de panneaux (100) sont positionnés afin de former une surface isolante raccordée, de sorte que la surface isolée a au moins un premier bord périphérique et un second bord périphérique à travers lesquels l'air peut passer de l'extérieur du panneau isolant (100) aux espaces d'air (103) de la pluralité de panneaux (100).

6. Bâtiment selon la revendication 5, dans lequel la surface de surface isolante opposée à la surface montée sur l'élément structurel est recouverte dans un matériau de renforcement (202).

7. Bâtiment selon la revendication 5 ou 6, comprenant en outre un système de ventilateur agencé pour aspirer l'air à travers les espaces d'air (103) des panneaux (100), via le premier bord périphérique de la surface isolante.

8. Bâtiment selon la revendication 7, dans lequel le système de ventilateur est en outre agencé pour souffler de l'air à travers les espaces d'air (103) des panneaux (100), via le premier bord périphérique de la surface isolante.

9. Bâtiment selon l'une quelconque des revendications 5 à 8, dans lequel les espaces d'air (103) des panneaux (100) sont en communication avec l'extérieur du bâtiment via le second bord périphérique de la surface isolante.

10. Procédé pour réduire la perte de chaleur de l'extérieur d'un bâtiment selon l'une quelconque des revendications 5 à 8, comprenant l'étape consistant à amener l'air à passer dans le second bord périphérique de la surface isolante en passant par l'espace d'air (103) de la surface isolante et à sortir par le premier bord périphérique de la surface isolante.

11. Procédé selon la revendication 10, dans lequel l'air qui sort par le premier bord périphérique de la surface isolante passe à l'intérieur du bâtiment.

12. Procédé pour augmenter la perte de chaleur de l'intérieur d'un bâtiment selon l'une quelconque des revendications 5 à 11, comprenant l'étape consistant à amener l'air à passer dans le premier bord périphérique de la surface isolante, en passant par l'espace d'air (103) de la surface isolante et à sortir par le second bord périphérique de la surface isolante.

FIG. 1

FIG. 2

*FIG. 3*

*FIG. 4*

*FIG. 5a*

*FIG. 5b*

102

111

## FIG. 6

120

121

122

## FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006111621 A1, Palay
- US 5561958 A, Clement
- FR 2597903 A1, La Rhenane SA
- CA 2777166 A1
- DE 2632486 A1